# DEMANDE DE BREVET EUROPEEN

(11) **EP 0 943 983 A1**
(43) Date de publication de la demande: **22.09.1999**
(21) Numéro de dépôt: 99200780.7
(22) Date de dépôt: 11.03.1999
(51) Int. Cl.: G06F 3/033

(54) **Appareil électronique comportant un écran et procédé de mise en évidence de graphismes**

(30) Priorité: 20.03.1998 FR 9803467
(71) Demandeur: Koninklijke Philips Electronics N.V., 5621 BA Eindhoven (NL)
(72) Inventeur: Ringot, Nicolas, 75008 Paris (FR)

(57) **Abrégé**

Cet appareil comporte un écran sur lequel différents graphismes ou différentes icônes (G1) peuvent apparaître.

Ces graphismes sont affectés de différents statuts (informations passives, informations à valider, informations validées). Une ombre (20) de grande importance est affectée à l'information à valider, une ombre (21) de faible importance est affectée à l'information validée. Aucune ombre n'est affectée à l'information passive.

Application : téléphones munis d'un écran.

## Description

La présente invention concerne un appareil électronique comportant :
- un écran sur lequel des graphismes affectés de différents statuts sont dessinés,
- des moyens de différenciation pour différentier lesdits statuts,
- des moyens de sélection pour sélectionner au moins un graphisme dont le statut le permet

L'invention concerne aussi un procédé de mise en évidence d'un graphisme.

De tels appareils sont bien connus et trouvent de nombreuses applications, notamment dans le domaine des ordinateurs de poche du genre connu sous le nom d'organiseur. Ces appareils utilisent des écrans noir et blanc de type LCD.

Un problème qui se pose avec de tels appareils, bien qu'ils présentent une définition satisfaisante, est qu'ils ne sont pas très aptes à restituer des gammes de gris satisfaisantes. Ainsi les icônes, ou graphismes, telles que représentées sur les systèmes d'exploitation usuels comme les Windows (marque déposée) récents ne permettent pas de discerner leur statut. Ce qu'on entend par statut est les différentes sortes d'informations que le système fournit : par exemple, on discerne des informations passives telles qu'un message de service et des informations actives qui obligent l'utilisateur à entreprendre des actions pour valider un choix.

La présente invention propose un appareil du genre mentionné dans le préambule dans lequel on a prévu des moyens pour faciliter la perception de statuts des différents graphismes qui sont susceptibles d'être affichés et qui se distinguent des pratiques connues des systèmes d'exploitation précités. L'invention est particulièrement adaptée aux appareils munis d'un écran du genre précité.

Pour cela, un tel appareil est remarquable en ce que les moyens de différenciation comportent des moyens d'ombrage pour adjoindre une ombre à des graphismes affectés d'un certain statut.

Une des idées de l'invention est de donner l'illusion à l'utilisateur que les graphismes sont des objets flottants sur une surface (la surface de l'écran) et selon que l'on active ou non le graphisme l'objet se trouve à une distance plus ou moins rapprochée de cette surface.

La description suivante, faite en regard des dessins ci-annexés, le tout donné à titre d'exemple non limitatif, fera bien comprendre comment l'invention peut être réalisée.

La figure 1 montre un appareil conforme à l'invention.

La figure 2 montre le détail de réalisation de l'organe de gestion que comporte l'appareil de la figure 1.

La figure 3 montre un graphisme visualisé grâce aux moyen de l'invention.

La figure 4 montre comment sont estimés les ombrages tels que préconisés par l'invention.

La figure 5 montre une vue en perspective à deux points de fuite pour visualiser des information de différents statuts.

Les figures 6A et 6B montrent une vue en plan de la vue en perspective de la figure 5, sur la figure 6B des ombres ont été portées.

La figure 7 montre la construction, en perspective, des ombres portées.

La figure 8 montre une vue projetée de la figure 7.

La figure 9 montre comment sont établies les règles de visualisations préconisées par l'invention.

La figure 10 montre la répartition des pixels relativement à la figure 9.

Les figures 11A, 11B et 11C montrent comment la validation et/ou la sélection d'un graphisme est visualisée.

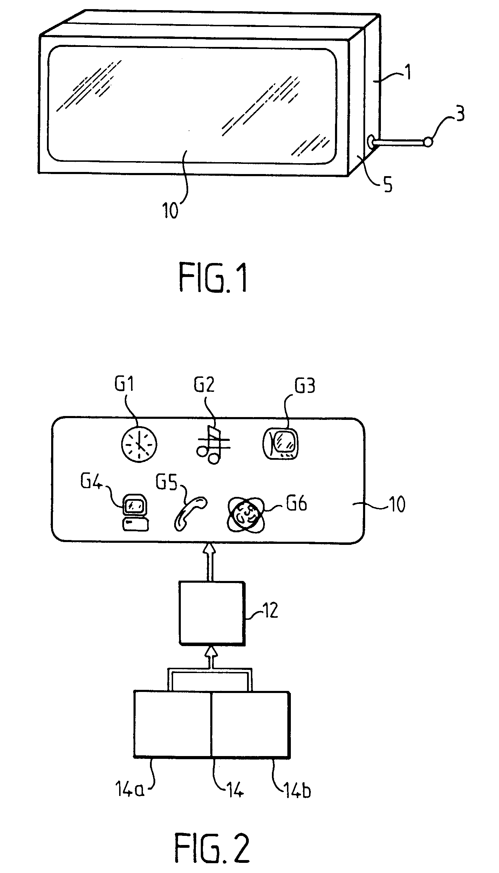

A la figure 1, on représenté un appareil électronique conforme à l'invention. Dans le cadre de l'exemple décrit cet appareil est un assemblage de deux appareils. D'un côté, non totalement représenté sur la figure, c'est un appareil de téléphonie mobile cellulaire 1 muni d'une antenne 3 et de l'autre un organiseur 5 qui permet différentes opérations indépendantes ou non de l'appareil de téléphonie. Cet appareil est muni d'un écran 10 sur lequel différentes informations sont rendues perceptibles à l'utilisateur.

La figure 2 montre cet écran avec son dispositif de commande d'affichage 12 associé. On peut ainsi afficher différents graphismes G1, G2, G3, G4, G5 et G6. Ces graphismes sont élaborés à partir d'informations issues d'une mémoire 14 associée à ce dispositif de commande 12.

On discerne certains statuts pour ces graphismes :
- un premier statut est relatif aux informations passives, telles qu'un texte d'avertissement,
- un deuxième statut est relatif aux informations de commande, par exemple, un bouton sur lequel il faut cliquer,
- un troisième statut est relatif aux mêmes informations mais qui ont été déjà validées car on a déjà cliqué dessus.

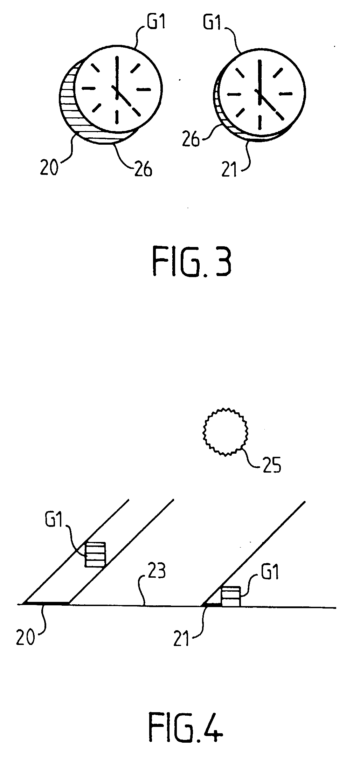

Conformément à l'invention, pour indiquer certains statuts de ces graphismes, il est prévu des moyens constitués à partir de l'organe de commande d'affichage 12 pour adjoindre une ombre aux graphismes concernés, ceci est montré à la figure 3.

Sur cette figure 3, on a montré le graphisme G1 avec une ombre portée large 20 ou avec une ombre portée étroite 21. Par ce biais, on donne l'illusion que l'objet graphique G1 se trouve à une certaine hauteur d'un plan 23, horizontal, et qu'il est éclairé par une source lumineuse 25 selon un angle de par exemple de 45° par rapport à l'horizontale, comme montré à la figure 4.

Pour pouvoir réaliser cet effet, la mémoire 14 contient, en deux emplacements séparés, les informations représentant, d'une part, à l'emplacement dont la référence est 14a (fig. 2) les graphismes avec une ombre portée importante et à l'emplacement 14b (fig. 2) une ombre portée minime. En variante, les ombres peuvent être entourées d'une ligne noire 26 (fig.3). Les graphisme sans ombre sont considérés comme des informations passives donc ne sollicitant aucune action de la part de l'utilisateur.

Bien que sur les figures précédentes, les graphismes se présentent sous la forme d'icônes, ces graphismes peuvent être aussi des caractères alphanumériques.

On donne ci-dessous les considérations qui sont à la base de l'invention.

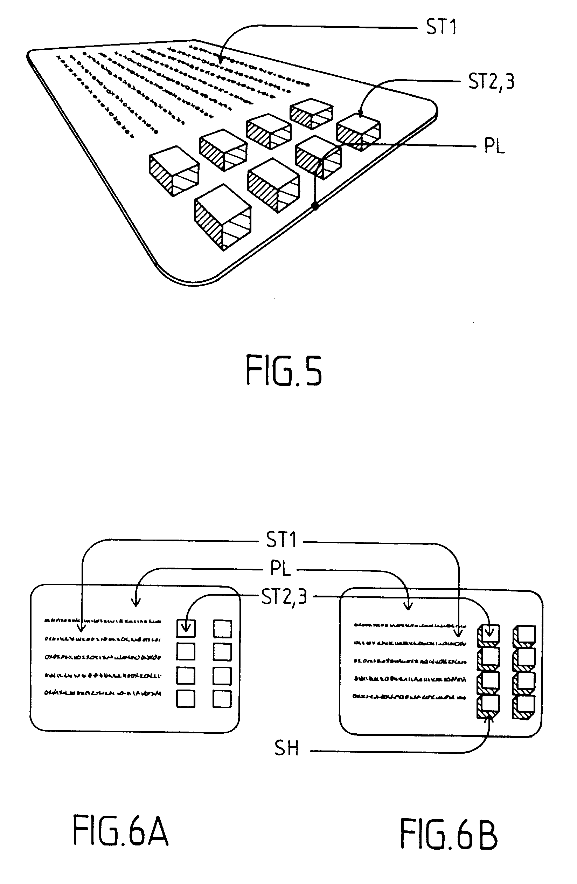

Le principe de représentation volumique réaliste en perspective à 2 points de fuite est montré dans les figures 5, 6A et 6B.

La figure 5 montre le procédé graphique le plus réaliste pour exprimer que les objets graphiques de deuxième ou troisième statut ST2,3 sont des objets posés sur un plan PL, alors que les objets de statut ST1 sont dans le plan PL. Cette figure 5 est un dessin de la scène en perspective à 2 points de fuite offrant une vue de dessus des objets.

La figure 6A montre en plan, sans effet de perspective la figure 5. Sur cette figure 6A, les informations ayant différents statuts ne se distinguent pas des autres. A la figure 6B, des ombres SH sont portées vers les objets de commandes ST2,3. On réalise ainsi une représentation volumique réaliste en Plan (Vue de face ou de dessus). On utilise le plan de projection comme plan d'impression affichant les informations passives. On s'intéresse à la représentation en vue de dessus (ou de face).

Cette représentation a comme premier avantage de présenter, sur le plan de projection toute les informations écrites ou dessinées face au spectateur et donc non déformées par les fuyantes. Le principe de représentation en vue de face ou de dessus a comme deuxième avantage d'être moins gourmand en surface de représentation.

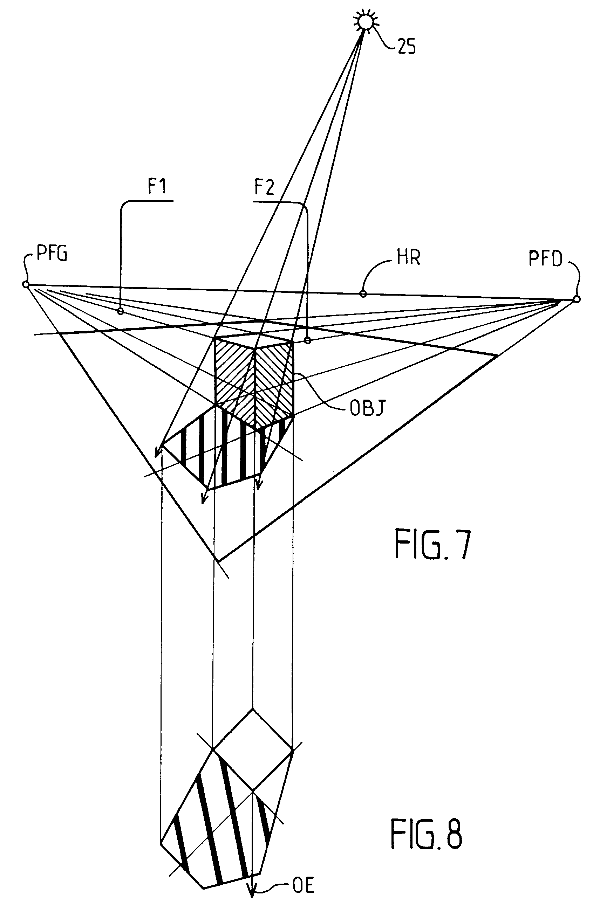

Les figures 7 et 8 montrent comment l'idée de volume est renforcée en calculant la luminosité de la scène à partir d'une source lumineuse 25, au moins. Cet éclairage va ombrer dans un premier temps les différentes faces de l'objet en fonction de leur exposition respective par rapport à la source lumineuse.

Cet éclairage va projeter dans un deuxième temps l'ombre de l'objet sur un plan, ce plan est alors appelé plan de projection, il correspond au sol en vue de dessus et à un mur en vue de face. Cette scène est calculée à partir de règles de géométrie descriptives décrites dans cette figure 7.

On explicite le principe de représentation en plan d'un objet éclairé en s'aidant des figures 7 et 8.

Afin d'exprimer graphiquement cet objet OBJ, illuminé par une source lumineuse 25, on utilisera une technique de trompe l'oeil. A la figure 8, on a représenté une vue en plan (ou vue de face) de l'objet en dessinant sa surface supérieure et son ombre portée, en grosses hachures, sur un plan de projection. On a noté par PFD et PFG les deux points de fuite situés sur une horizontale HR. C'est sur ces points que convergent les fuyantes F1, F2 qui délimitent ledit objet.

Le plan de projection sera la surface d'affichage des informations passives sur laquelle le spectateur aura l'illusion optique que des objets (les commandes) sont posés.

Ce contraste permettra à l'utilisateur d'identifier rapidement les éléments d'informations optiquement plats et situés au second plan, des commandes identifiées visuellement comme des objets au premier plan. L'oeil OE (fig.8) examine donc la scène et les ombrages, ce qui donne l'illusion que les objets sont au-dessus du plan.

L'ombre est solidarisée à l'objet par les axes de projection ombrés partant du point de fuite de la source lumineuse au sol et tangents aux bords supérieurs et inférieurs de la base de l'objet, les bords étant définis comme les 2 points appartenant à la base de l'objet, les plus proches des 2 points de fuite horizontaux.

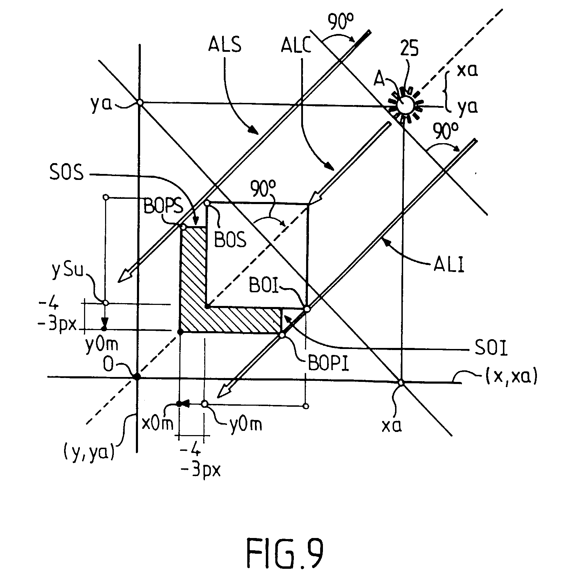

Pour des raisons de commodité graphique on simplifie le principe de représentation réaliste d'un objet posé sur un plan en adoptant les règles graphiques suivantes. On se reporte alors à la figure 9.
Règle 1
   «a» étant une variable de 1 à l'infini, l'objet sera toujours posé sur un plan carré orthonormé constitué de 2 axes : l'axe vertical (x, xa) et l'axe horizontal (y, ya). Le centre de la surface de l'objet sera toujours placé sur le segment [O(x=O; y=O) ; A(x=a; y=a) 1].
Règle 2
   La source lumineuse 25 sera par défaut placée sur la médiatrice (y, ya) du segment (xa, ya),définie ci-dessus comme le segment (O;A).
Règle 3
   On posera la source lumineuse en (x=a; y=a). Le sens de projection lumineux sera du point (x=a; Y=a) vers le point (x=O; Y=O). Soit au-dessus de l'objet et toujours en haut à droite dans la page.
Règle 4
   Les 2 axes de projection lumineux inférieur ALI et supérieur ALS situés de part et d'autre de l'axe de projection central ALC qui passe par la source lumineuse 25, seront parallèles à la médiatrice (y,ya) du Segment (xa, ya), comme les 2 axes de projection lumineux au sol, avec lesquels, ils se confondront.
Règle 5
   "BOS" est le bord supérieur de l'objet comme le point (appartenant à la surface supérieure de l'objet) le plus proche du point (x=O, y=a).
   "BOI" est le bord inférieur de l'objet comme le point (appartenant à la surface supérieure de l'objet) le plus proche du point (x=a; y=O).
Règle 6
   "BOPS" et "BOPI" sont les bords inférieurs et supérieurs de l'ombre portée, comme les 2 projections respectives des points "BOS" et "BOI" sur les axes supérieurs et inférieurs de projection ombrée.
Règle 7
   La surface occultée supérieure est définie par l'aire comprise entre le bord supérieur de la surface ombrée et le bord gauche de la surface de l'objet. Cette aire est délimitée par le segment (BOS, BOPS). La surface occultée inférieure est définie par l'aire comprise entre le bord inférieur de la surface ombrée et le bord inférieur de la surface de l'objet. Cette aire est délimitée par le segment (BOI, BOPI).
Règle 8
   L'ombre portée sera la réplique de la surface de l'objet copiée au second plan et décalée de cette dernière sur l'axe de projection lumineux à une distance qui est appelée "profondeur de projection". A cette aire ne sera pas associée la somme des deux surfaces occultées SOS"et"SOI", de manière à exprimer des objets flottants et non posés.
Règle 9
   9a/ La profondeur de projection est la distance à laquelle la surface de l'objet est projetée sur le plan en ombre portée.
   9b/ La profondeur de projection est égale à la distance entre les points : BOS et BOPS (ou BOI et BOPI).
   9c/ Cette distance est calculée en fonction de la taille de la surface de l'objet. La surface d'impression étant un écran, l'unité pour exprimer la profondeur de projection sera le "Pixel". Pour une surface > 160 Pixels < 640, si la position de la surface de l'objet = (xSu; ySu) la position de la surface ombrée sera alors (xOm; yOm) = (xSu - 4 pixels, ySu - 4 pixels) ce qui est noté sur la figure 9 par - 4, - 3 px. La surface de l'objet représente une application. On évalue cette surface par un cadre généralement carré qui pourra contenir toutes les icônes représentant les applications.

La surface d'impression étant un écran, l'unité pour exprimer la profondeur de projection sera le "Pixel". Pour une surface d'objet de 1600 pixels à 6400 pixels, si la position de la surface de l'objet = (xSu; ySu), la position de la surface ombrée sera alors [xOm; yOm)] = (xSu - 4 pixels; ySu - 4 pixels).Pour une surface d'objet supérieure à 400 pixels et inférieure à 1600 pixels, si la position de la surface de l'objet = (xSu; ySu), la position de la surface ombrée sera alors (xOm; yOm) = (xSu - 3 pixels, ySu - 3 pixels).

On montre dans les figures suivantes le principe dynamique de la commande.

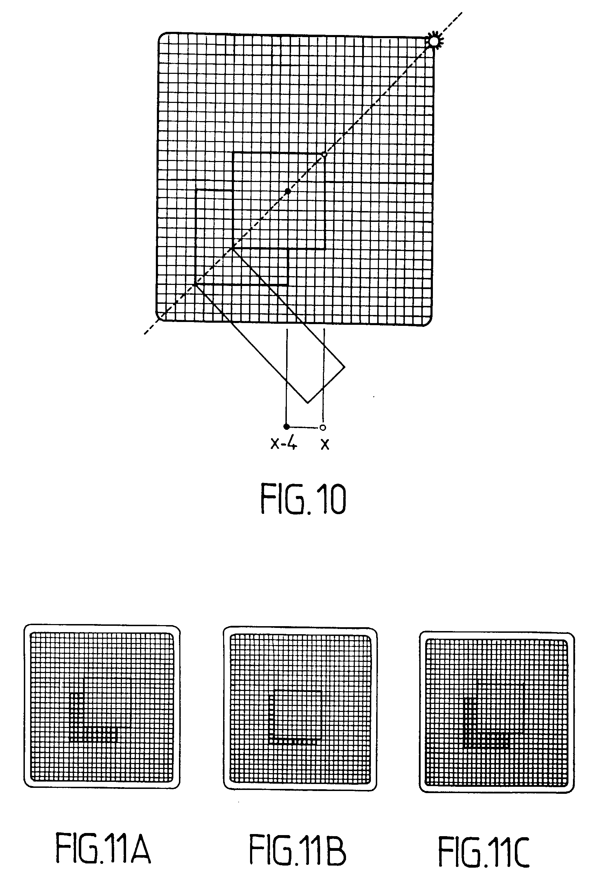

On définit, d'abord, la signification de la profondeur de projection, pour cela on se reporte à la figure 10.

La profondeur de projection dans la réalité est inversement proportionnelle à la distance entre la surface supérieure de l'objet (son sommet) et la source lumineuse. Plus la source lumineuse sera proche du sommet de l'objet (Lumière basse dite rasante) plus la profondeur de projection sera longue et l'ombre étirée. Plus la source lumineuse sera éloignée du sommet de l'objet (Lumière haute dite zénithale) plus la profondeur de projection sera courte et l'ombre petite.

A source lumineuse constante, la profondeur de projection sera proportionnelle à la hauteur de l'objet. Plus la surface supérieure de l'objet sera haute (éloignée du plan de projection plus la profondeur de projection sera importante et l'ombre importante. Inversement, plus la surface supérieure de l'objet sera basse, plus la profondeur de projection sera courte et l'ombre petite.

### EFFET DE BOUTON-POUSSOIR

On utilisera cette loi pour exprimer l'effet d'enfoncement propre à celui d'un bouton-poussoir, ceci afin de confirmer visuellement à l'utilisateur l'activation d'un élément actif, tel que l'ouverture d'une application ou l'exécution d'une opération.

### - Spécification graphique dynamique de l'effet d'enfoncement.

Cet effet d'enfoncement est exprimé à l'aide d'une séquence dynamique composée de 3 images montrées aux figures 11A, 11B et 11C.

### 1/ L'image de départ :

L'image de départ représentera la surface supérieure de l'objet en une position (x,y) ainsi que son ombre portée en position (x-4 pixels, y-4 pixels) ou (x-3 pixels, y-3 pixels). La profondeur de projection étant égale à 4 pixels ou 3 pixels.

### 2/ L'image d'arrivée :

L'image d'arrivé représentera la surface supérieure de l'objet en (x-2 pixels; y-2 pixels) l'ombre portée restera en (x-4 pixels; y-4 pixels) ou (x-3 pixels; y-3 pixels). A la lecture des 2 images le spectateur aura l'illusion optique d'un effet d'enfoncement de l'objet.

L'image 2 sera affichée à l'écran durant la phase de sélection ou d'activation, correspondant à un 'Click' souris.

### - Spécification graphique dynamique de l'effet de retour.

L'image de départ :

L'image de départ peut être replacée à la suite de l'image 2 afin d'enrichir l'effet d'enfoncement d'un effet de retour.

La séquence composée des images 11A, 11B et 11C exprime la dynamique d'enfoncement et celle de retour, identique au retour d'un bouton poussoir.

### Principe d'interactivité :

La séquence d'enfoncement et de retour sera consécutive à l'activation d'une application par l'utilisateur, elle confirmera cette activation et précédera l'ouverture de l'application à l'écran.

### Définition de la palette graphique :

On définit une palette de gris linéaire allant de la valeur 0% équivalant au blanc, à la valeur 100% équivalant au noir. On attribue une fourchette de valeurs de cette palette à chacun des éléments graphiques qui seront exprimés désormais dans leurs teintes.

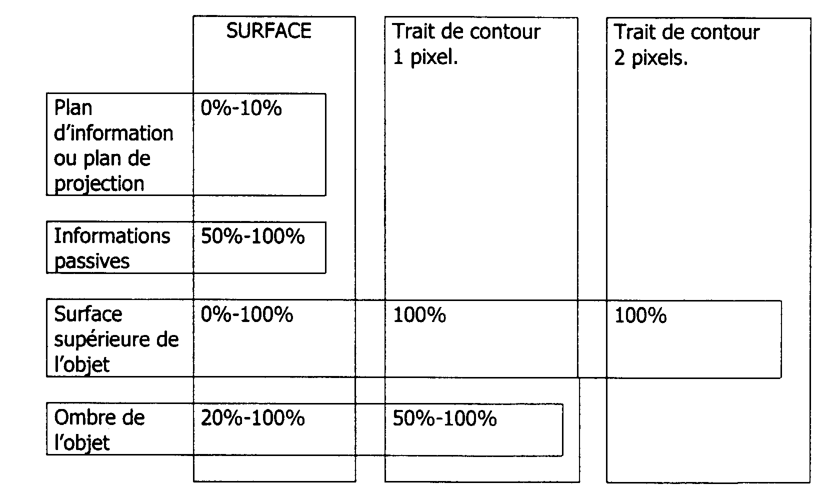

Le principe de mise en page est régit par les 2 règles d'émargement suivantes qui s'ajoutent aux règles précitées :
Règle 1 : Une marge équidistante séparera chaque icône des autres.
Règle 2 : La dénomination de la fonction, information texte passive, reposera sous l'icône éloignée de celle-ci par une marge minimum de 1 pixel.

On peut aussi, sans sortir du cadre de l'invention, ajouter aux graphismes, des ombres d'importances diverses entourées éventuellement d'une ligne noire. Par exemple, on propose :
- d'affecter une ombre de première importance au graphisme concerné pour un premier statut,
- d'affecter une ombre de deuxième importance au graphisme concerné pour un deuxième statut,
- d'enlever l'ombre pour un graphisme d'un troisième statut.

## Revendications

1. Appareil électronique comportant :
- un écran sur lequel des graphismes affectés de différents statuts sont dessinés,
- des moyens de différenciation pour différentier lesdits statuts,
- des moyens de sélection pour sélectionner au moins un graphisme dont le statut le permet,
caractérisé en ce que les moyens de différenciation comportent des moyens d'ombrage pour adjoindre une ombre à des graphismes affectés d'un certain statut.

2. Appareil selon la revendication 1 pour lequel les statuts concernent un premier statut d'information active et un deuxième statut d'information active sélectionnée, caractérisé en ce que les moyens d'ombrage portent une ombre de première importance pour signaler un desdits statuts et une ombre de deuxième importance pour signaler l'autre desdits statuts.

3. Appareil selon la revendication 2 pour lequel les statuts concernent un troisième statut d'information passive, caractérisé en ce que les moyens d'ombrage sont mis hors service pour signaler ce troisième statut.

4. Appareil selon l'une des revendications précédentes, caractérisé en ce que les ombres sont entourées d'une ligne noire.

5. Procédé de mise en évidence de statuts de graphisme mis en oeuvre dans un appareil selon l'une des revendications 1 à 4, caractérisé en ce qu'il comporte les étapes suivantes :
- affectation d'une ombre de première importance au graphisme concerné pour un premier statut,
- affectation d'une ombre de deuxième importance au graphisme concerné pour un deuxième statut,
- absence d'ombre pour un graphisme d'un troisième statut.
